# EUROPÄISCHE PATENTANMELDUNG

(11) **EP 2 256 470 A1**
(43) Veröffentlichungstag der Anmeldung: **01.12.2010**
(21) Anmeldenummer: 10163126.5
(22) Anmeldetag: 18.05.2010
(51) Int. Cl.: G01J 3/02, G01J 3/46, G01J 3/50

(54) **Dentalfarben-Analysevorrichtung**

(30) Priorität: 29.05.2009 EP 09161604
(71) Anmelder: Ivoclar Vivadent AG, 9494 Schaan (LI)
(72) Erfinder: Rohner, Gottfried, 9450 Altstätten (CH); Bertsch, Diethard, 6811 Göfis (AT); Brotzge, Michael, 6842 Koblach (AT)
(74) Vertreter: Splanemann

(57) **Zusammenfassung**

Die Erfindung betrifft eine Dentalfarben-Analysevorrichtung, mit einem Gehäuse, einer eine Speichereinheit aufweisenden Rechnervorrichtung und einem Bildschirm, auf dem ein Referenzobjekt gemeinsam mit wenigstens einem Zahn und/oder einen Zahnfleischbereich darstellbar ist, wobei mindestens ein Bildausschnitt des Referenzobjekts (erster Bildausschnitt) sowie mindestens ein Bildausschnitt des Zahns, eines Zahnbereichs oder Zahnfleischbereichs (zweiter Bildausschnitt) von der Rechnervorrichtung erfaßbar ist, wobei das Referenzobjekt ein dentaler Farbschlüssel 10 ist, der Farbmuster 12 aufweist, die nebeneinander angeordnet sind und je eine Dentalfarbe wiedergeben, und dass die Farbe des zweiten insbesondere wählbaren Bildausschnitts von der Rechnervorrichtung mit dem dargestellten Farbmustern 12 verglichen wird, und dass die Rechnervorrichtung anzeigt oder ausgibt, welches Farbmuster 12 der Farbe des zweiten Bildausschnitts am ähnlichsten ist.

## Beschreibung

Die Erfindung betrifft eine Dentalfarben-Analysevorrichtung, gemäß dem Oberbegriff von Anspruch 1.

Für die Bestimmung von Zahnfarben werden seit langer Zeit Farbschlüssel eingesetzt, die es ermöglichen sollen, bei der Auswahl einer Farbe eines zu restaurierenden Zahns eine möglichst gute Annäherung an die Nachbarzähne zu erzielen, um so dem Restaurat ein natürliches Erscheinungsbild geben zu können.

Ein derartiger dentaler Farbschlüssel ist in der DE 195 09 830 C2 offenbart.

In neuerer Zeit wurde eine elektronische Farbbestimmung vorgenommen, wie es beispielsweise aus der DE 10 2007 035 610 A1 ersichtlich ist.

Innerhalb eines Zahns ändert sich der Farbton typischerweise, und insbesondere auch die Transluzenz.

Um menschliche Einflüsse bei der Beurteilung auszuschließen, ist es auch vorgeschlagen worden, eine vorhandene Zahnfarbe mit einer Dentalkamera zu erfassen und elektronisch die geeignete Zahnfarbe wie A2, A3 usw. auszuwählen. Für eine derartige Lösung müssen jedoch aufwändige Kalibrierungsschritte vorgenommen werden, und eine elektronische Farberfassungsvorrichtung kommt eher bei größeren Zahnarztpraxen in Frage.

Eine elektronische Farberfassung ergibt überraschend jedoch vielfach nicht die optimalen Ergebnisse, nachdem eine Dentalkamera beispielsweise die Transluzenz nur unzureichend erfasst. Um dies zu verbessern, wird in manchen Fällen ein zusätzlicher Abgleich mit einem handelsüblichen Farbschlüssel vorgenommen, was im Grunde genommen ein Zusatzaufwand mit sich bringt.

Ferner ist es bereits vorgeschlagen worden, eine Bilderfassung eines bestehenden und von einer Dentalkamera aufgenommenen Bildes automatisch vorzunehmen. Um die Farbfehler zu kompensieren, ist es auch vorgeschlagen worden, eine Farbtransformation durchzuführen, wobei es sich gezeigt hat, dass diese Lösung trotz des anfallenden Aufwands leider keine verbesserten Ergebnisse mit sich bringt.

Daher liegt der Erfindung die Aufgabe zugrunde, eine Dentalfarben-Analysevorrichtung gemäß dem Oberbegriff von Anspruch 1 zu schaffen sowie ein Verfahren zur Analyse von Dentalfarben gemäß dem Oberbegriff von Anspruch 13 anzugeben, die für die praktische Realisierung der Erstellung eines Zahnrestaurats oder Teilrestaurats verbessert sind und eine harmonischere Realisierung der Restaurate ermöglicht wird, wobei die Dentalfarben-Analysevorrichtung leicht zu handhaben und besonders kostengünstig in der Herstellung ist.

Diese Aufgabe wird erfindungsgemäß durch den Vorrichtungsanspruch 1 sowie durch den Verfahrensanspruch 13 gelöst. Vorteilhafte Weiterbildungen ergeben sich aus den Unteransprüchen.

Durch die erfindungsgemäße Dentalfarben-Analysevorrichtung wird erreicht, dass mit einer einzigen Vorrichtung und durch ein einziges Bild des zu restaurierenden Zahnes und der Nachbarzähne, welches Bild mit der Analysevorrichtung aufgenommen wird, ohne dass eine zusätzliche Dentalkamera benötigt wird, eine präzise Farbanalyse des zu restaurierenden Zahnes vorgenommen und ggf. die bildliche Darstellung des zu restaurierenden Zahnes auf einem Bildschirm der Analysevorrichtung angezeigt wird.

Die Farbanalyse wird erfindungsgemäß mit Hilfe eines sog. Minifarbschlüssels, der kleiner als die vestibuläre Fläche eines Referenzzahnes ist, durchgeführt. Der Minifarbschlüssel weist eine Vielzahl von einzelnen Farbmustern auf, so dass beim Auswählen eines der Farbmuster, der zu restaurierende Zahn mit der ausgewählten Farbe versehen wird und ein Vergleich mit dem Referenzzahn und/oder den weiteren im Bild gezeigten Nachbarzähnen automatisch durchgeführt wird. Obwohl der Referenzzahn teilweise von dem Farbschlüssel abgedeckt wird, ist dies für die Beurteilung der Zahnfarbe nicht störend. Durch die räumliche Nähe des Farbschlüssels mit dem zu restaurierenden Zahn wird eine bessere Beurteilung der Farbharmonie bei direkter Betrachtung erreicht.

Die kleinen Abmessungen des Minifarbschlüssels erlauben es, diesen an unterschiedlichen Teilen des Referenzzahnes anzubringen und somit je nach Bedarf die Farbbestimmung nur für die Teile des zu restaurierenden Zahnes durchzuführen, die restaurationsbedürftig sind und die bekannterweise unterschiedliche Schattierungen aufweisen können. So weist ein natürlicher Zahn auf seiner gingivalen Fläche eine dunklere Schattierung als der Rest des Zahnes auf.

Mit der erfindungsgemäßen Dentalfarben-Analysevorrichtung wird erreicht, dass mit einer in der Dentalfarben-Analysevorrichtung enthaltenen Bilderfassungsvorrichtung in einem einzigen Bild sowohl ein Zahn und/oder sein Nachbarzahn als auch ein dentaler Farbschlüssel aufgenommen und in einer Rechnervorrichtung der Analysevorrichtung abgespeichert werden können. Der dentale Farbschlüssel ist dabei derart ausgebildet, dass er auf wenigstens einem Zahn angebracht und befestigt werden kann. Es können aber auch mehrere Farbschlüssel, die nicht nur die gängigen Zahnfarben, sondern auch Bleachfarben und/oder Zahnfleischfarben enthalten, in einer Speichervorrichtung der Dentalfarben-Analysevorrichtung abgespeichert werden, um diese als virtuelle Farbschlüssel auf dem Nachbarzahn des zu restaurierenden Zahnes zu platzieren. Dabei weist der Farbschlüssel eine geringere Größe auf, als den Zahn, auf dem der Farbschlüssel angebracht oder befestigt wird, um die gemeinsame Bestimmung der Zahnfarben zu ermöglichen. Es besteht auch eine enge räumliche Nachbarschaft zwischen dem Farbmuster als Referenz und dem zweiten Bildausschnitt, der den Zahn wiedergibt.

Die geringen Abmessungen des Farbschlüssels erlauben es, diesen an verschiedenen Stellen des Zahnes, welcher dem zu reparierenden Zahn benachbart ist, zu platzieren. Dabei hindern die kleinen Abmessungen des Farbschlüssels, welcher nebeneinander angeordnete Farbmuster aufweist, nicht die Genauigkeit der Zahnfarbenanalyse, denn auf dem Bildschirm kann ein Referenzzahn, welcher mit dem Farbschlüssel versehen ist, vergrößert dargestellt werden und bestimmte Bereiche des Zahnes können ausgewählt und angezeigt werden. Bei einem virtuellen Farbschlüssel ist es dabei besonders vorteilhaft, dass dieser auf den ausgewählten, vergrößerten Bereichen des Referenzzahnes platziert werden kann, um eine bessere bildliche Darstellung des entsprechenden Bereichs zu realisieren, wobei ein Farbvergleich auch mit bloßem Auge durchgeführt werden kann.

Es wird als besonders bevorzugt angesehen, wenn der auf dem Zahn angebrachte Referenzobjekt, nämlich der Farbschlüssel mittig auf einem Referenzzahn angebracht ist, wobei sämtliche Farbmuster höchstens die einfache Breite und/oder Höhe eines Farbmusters von der benachbarten Fläche des Referenzzahnes entfernt sind, d.h., dass zwischen einer zu beurteilenden Fläche des Zahnes und dem Farbmuster, das farblich am ähnlichsten dieser Fläche ist, höchstens ein weiteres benachbartes Farbmuster liegt. Somit kann der Zahnarzt oder Zahntechniker auf einer einfachen Weise und mit einer hohen Sicherheit das farblich zutreffende Farbmuster auch mit bloßem Auge bestimmen. Dadurch, dass der Farbschlüssel auf dem Zahn angebracht und befestigt werden kann, oder aber auch als virtueller Farbschlüssel auf dem Zahn anbringbar ist, kann der Benutzer der erfindungsgemäßen Dentalfarben-Analysevorrichtung den Farbschlüssel auf der Oberfläche des Zahnes bewegen und umdrehen, so dass immer zwischen der zu beurteilenden freien Fläche des Zahnes und einem Farbmuster des Farbschlüssels höchstens ein weiteres Farbmuster liegt.

Eine bevorzugte Ausführungsform der erfindungsgemäßen Dentalfarben-Analysevorrichtung sieht vor, das Referenzojekt als ein virtueller Farbschlüssel auf einem oder mehreren Zähnen anzubringen, insbesondere auf den Zahn bzw. die Zähne zu projizieren. Somit kann ein optimaler Farbvergleich mit den Nachbarzähnen erreicht werden und es können mit einem geringen Aufwand mehrere Farbschlüssel innerhalb kürzester Zeit auf dem Zahn platziert werden, bis der passende Farbschlüssel bestimmt wird.

Erfindungsgemäß besonders günstig ist es, dass die Dentalfarben-Analysevorrichtung ein Gehäuse, eine Rechnervorrichtung mit einer Speichereinheit und einen Bildschirm aufweist, auf dem ein Referenzobjekt gemeisam mit wenigstens einem Zahn und/oder einem Zahnfleischbereich dargestellt wird, wobei mindestens ein Bildausschnitt des Referenzobjekts - erster Bildausschnitt - sowie mindestens ein Bildausschnitt des Zahns, eines Zahnbereichs oder Zahnfleischbereichs - zweiter Bildausschnitt - von der Rechnervorrichtung erfasst wird.

Erfindungsgemäß besonders günstig ist es, dass das Referenzobjekt ein dentaler Farbschlüssel ist, der Farbmuster aufweist, die nebeneinander angeordnet sind und je eine Dentalfarbe wiedergeben, und dass die Farbe des zweiten insbesondere wählbaren Bildausschnitts von der Rechnervorrichtung mit den dargestellten Farbmustern verglichen wird, wobei die Rechnervorrichtung anzeigt oder ausgibt, welches Farbmuster der Farbe des zweiten Bildausschnitts am ähnlichsten ist.

Die erfindungsgemäße Dentalfarben-Analysevorrichtung sieht vor, mit Hilfe der Rechnervorrichtung, die Farbe eines wählbaren Bildausschnitts mit den auf dem Bildschirm der Dentalfarben-Analysevorrichtung dargestellten Farbmustern des Farbschlüssels, welcher auf dem Referenzobjekt angebracht ist und wesentlich kleinere Abmessungen als das Referenzobjekt aufweist, zu vergleichen, so dass das Farbmuster, welches der Farbe des ausgewählten Bildausschnitts am ähnlichsten ist, auf dem Bildschirm angezeigt werden kann. Somit kann mit der erfindungsgemäßen Dentalfarben-Analysevorrichtung eine bestimmte Zone des Referenzzahnes mit dem virtuellen Zahnfarbenschlüssel abgeglichen werden. Damit lassen sich automatisch die Farbfehler der Bilderfassungsvorrichtung kompensieren, denn der dentale Farbschlüssel zeigt bekanntlich die echten Zahnfarben wie A2, A3 und die Farberfassungsvorrichtung muss lediglich sicherstellen, dass innerhalb des Bildes keine Chromogradienten bestehen, was aber typischerweise bei den üblichen CCD-Sensoren nicht der Fall ist.

Überraschend ist es, dass bei der erfindungsgemäßen Dentalfarben-Analysevorrichtung die Kalibrierung der Bilderfassungsvorrichtung nicht erforderlich ist, und auch das aufwändige Nachkalibrieren, das in Zahnlabors besonders unerwünscht ist, nicht mehr vorgenommen werden muss. Erfindungsgemäß ist es ferner vorgesehen, dass bei der Darstellung auf einem Bildschirm automatisch von der Rechnervorrichtung ein Farbvergleich vorgenommen wird und das Farbmuster des Referenzobjekts, das als dentaler Farbschlüssel ausgebildet ist, als erster Bildausschnitt angezeigt oder ausgegeben wird, das der Farbe des abgespeicherten Zahns, Zahnbereichs oder Zahnfleischbereichs am ähnlichsten ist. Dies kann auch ohne Weiteres elektronisch vorgenommen werden, wobei überraschend die Farbfestlegung durch den direkten visuellen Vergleich auf dem Bildschirm deutlich verbessert werden kann. Das Referenzobjekt wird erfindungsgemäß zusätzlich in den zweiten Bildausschnitt auf dem Bildschirm dargestellt, insbesondere neben diesem.

Hierdurch lassen sich praktisch die Vorteile der visuellen Beurteilung durch einen Menschen, mit denen des elektronischen Vergleichs kombinieren, denn der Zahntechniker oder Zahnarzt kann hier eingreifen und beispielsweise den okklusalen Bereich der Zähne transparenter gestalten als dies von dem elektronischen Vergleich her vorgegeben ist.

In vorteilhafter Ausgestaltung wird praktisch automatisch eine Approximation mit einheitlich gefärbten Flächen des erfassten Zahns oder Zahnbereichs vorgenommen. Die Wiedergabe muss nicht als Farbwiedergabe vorgegeben sein, sondern kann beispielsweise auch über eine Schraffur oder ein Muster, das mit A2, A3 usw. bezeichnet ist, dem Zahnarzt oder Zahntechniker gleich die erforderliche Hilfestellung an die Hand geben, welche Zahnfarbe er wo verwenden sollte.

Die Anzahl der Farbmuster des Zahnschlüssels kann in beliebiger Weise an die Erfordernisse angepasst werden. Typischerweise können mehrere verschiedene Farbschlüssel verwendet werden, und es wird derjenige Farbschlüssel ausgewählt, der vom Grundton her für das Restaurat am geeignetsten erscheint, wobei dieser Farbschlüssel beispielsweise 16 Farbmuster aufweisen kann, die in Form einer Matrix angeordnet sind.

Die von der Rechnervorrichtung ausgegebenen und dort abgespeicherten Ergebnisse lassen sich auch ohne Weiteres elektronisch aufbereitet exportieren, beispielsweise auch zu einer CAD-/CAM-Vorrichtung für die Herstellung von Zähnen, wobei es besonders günstig ist, wenn hier vom Zahntechniker noch Korrekturen manuell vorgenommen werden können.

Typischerweise ist der dentale Farbschlüssel an einer beliebigen Stelle als Miniatur-Farbschlüssel auf der vestibulären Fläche des Zahns angebracht und ist so realisiert, dass er eng benachbart dem zweiten Bildabschnitt ist. Er kann verschiebbar angebracht sein, um alle Bereiche der vestibulären Fläche eines Zahnes erfassen zu können. Es wird dabei als besonders vorteilhaft angesehen, wenn die ausgewählte Zahnfarbe in die umgrenzte Zone des Zahnes eingeblendet wird. Der Farbschlüssel kann aber auch auf unterschiedlichen Zähnen angebracht sein. Falls ein oder mehrere Farbschlüssel als virtuelle Farbschlüssel abgespeichert sind, kann beispielsweise mit Hilfe eines Cursors der Farbschlüssel, der die größte Farbübereinstimmung mit den Referenzzähnen aufweist, ausgewählt und auf einem Referenzzahn platziert werden. Dabei wird als besonders vorteilhaft angesehen, wenn die abgespeicherten Farbschlüssel auf dem Bildschirm der Dentalfarben-Analysevorrichtung anzeigbar sind.

Eine besonders günstige Ausgestaltung sieht vor, dass jedes Farbmuster auf dem Bildschirm in Form einer räumlich begrenzten insbesondere von einer Randlinie umgebenen Fläche wiedergegeben ist. Dabei kann mit Hilfe eines Cursor auf diese Fläche gezeigt werden, um die ausgewählte Farbe auf dem zu restaurierenden Zahn einzublenden. Die Rechnervorrichtung kann dabei die Abweichung zwischen der eingeblendeten Farbe und der Farbe des Referenzzahnes errechnen. Falls die Abweichung zu groß ist, wird mit Hilfe der Rechnervorrichtung eine Mischfarbe errechnet, die aus zwei oder mehreren Farbmustern bestehen kann. Somit können auch eine Vielzahl von Farbschattierungen mit der erfindungsgemäßen Dentalfarben-Analysevorrichtung elektronisch hergestellt werden, ohne dass eine Vielzahl von Farbschlüsseln abgespeichert werden muss. Der derart durch die Analysevorrichtung erstellte Farbmuster, das aus Mischfarben besteht und nicht unbedingt eine der im Farbschlüssel enthaltenen Farben A1, A2, usw. entspricht, kann für die Herstellung der Restauration verwendet werden.

Vorzugsweise sind die Farbmuster des Farbschlüssels nebeneinander angeordnet und weisen zusammen eine Größe auf, die höchstens doppelt so groß und mindestens halb so groß wie die Darstellung des Zahnbereichs oder Zahnfleischbereichs auf dem Bildschirm ist.

Besonders günstig ist es, dass das dem ersten Bildausschnitt ähnlichste Farbmuster optisch oder aber auch akustisch selektiert angezeigt werden kann, während eine Zeigereinheit, wie ein Cursor, den zweiten Bildausschnitt, also den Zahn, den Zahnbereich oder den Zahnfleischbereich überfährt. Zusätzlich zur Anzeige des Farbmusters, insbesondere des selektierten Farbmusters, kann in einer vorteilhaften Ausbildung der erfindungsgemäßen Dentalfarben-Analysevorrichtung die Benennung (A1, A2, usw. des Farbmusters optisch, insbesondere auf dem Bildschirm angezeigt und/oder akkustisch ausgegeben werden. Es ist besonders wichtig, dass die einzelnen Farbmuster mit ihrer Benennung A1, A2, usw. angezeigt werden können, so dass die Farbbestimmung nicht von der Bildqualität und den Lichtverhältnissen, bei denen die Aufnahme der Referenzzähne und des zu restaurierenden Zahns erfolgt ist, abhängt. Dabei wird als besonders vorteilhaft angesehen, wenn die Farbmuster, welche auf einem Grundkörper des Farbschlüssels fest angebracht sind und auf einem oder zwei Referenzzähnen zum Zwecke des Vergleichs befestigt werden, aus Restaurationsmaterial bestehen und somit die bildliche Aufnahme des Referenzzahnes mit dem darauf angebrachten Farbschlüssel unabhängig von der Qualität der Aufnahme die tatsächlichen Farbverhältnisse wiedergibt. Somit wird die Präzision der Farbanalyse und damit auch der Zahnrestauration wesentlich erhöht.

Als besonders günstig wird angesehen, dass der Farbschlüssel mindestens 3, insbesondere 16 verschiedene Farbmuster aufweist, wobei insbesondere mindestens ein Farbmuster einer Bleachfarbe entspricht. Es ist aber auch denkbar und mit der erfindungsgemäßen Dentalfarben-Analysevorrichtung leicht realisierbar, einen oder mehreren Farbschlüssel abzuspeichern, die als Farbmuster lediglich Bleachfarben enthalten.

Der Farbschlüssel kann aber auch mindestens ein Farbmuster, das einer Zahnfleischfarbe entspricht, aufweisen.

Vorzugsweise wird in der Speichervorrichtung der Dentalfarben-Analysevorrichtung ein Mini-Farbschlüssel abgespeichert, der kleiner als ein Referenzzahn ist und lediglich eine Matrix aufweist, die nur die Flächen der jeweiligen Farbmuster in Form eines Gitters bestimmt, wobei eine große Anzahl von Farbmustern zusätzlich abgespeichert und miteinander gemischt werden können, bis die gewünschte Mischfarbe entsteht. Diese Farbmuster, die die Rechnervorrichtung selbst selektiert, können dann auf die freien Flächen des Farbschlüssels virtuell angebracht werden, um die Genauigkeit der Analyse durch den "zusammengewürfelten" Farbschlüssel zu erhöhen.

Vorzugsweise weist die Analysevorrichtung eine Dentalkamera auf, die in der Vorrichtung integriert ist. Die Analysevorrichtung kann aber auch mit einer externen Dentalkamera zusammenwirken, wobei die Qualität der Aufnahme für den Analysiervorgang nicht von entscheidender Bedeutung ist.

Eine besonders vorteilhafte Ausbildung der erfindungsgemäßen Dentalfarben-Analysevorrichtung sieht vor, nach dem Analysiervorgang, die fertige Rekonstruktion mit der Zahnfarbe auf dem Bildschirm der Dentalfarben-Analysevorrichtung anzuzeigen und zwar als eine 3-dimensionale Abbildung, die auch als Vorgabe für den späteren Restaurationsvorgang dienen kann. Somit wird die erfindungsgemäße Analysevorrichtung nicht nur zur Farbanalyse verwendet, sondern auch zur einer digitalen Herstellung und zum Anzeigen des fertigen Restaurats mit den nach dem Analysevorgang ermittelten Farben und Schattierungen. Dabei wird es als besonders bevorzugt angesehen, wenn die Dentalfarben-Analysevorrichtung mit einer Schnittstelle versehen ist, um sie mit einem PC zu verbinden, so dass die Ergebnisse des Analysevorgangs auf dem PC und auch an das Dentallabor via Internet übertragen werden können. Dabei besteht die Möglichkeit, dass der Zahntechniker selbst Änderungen vornehmen kann.

Erfindungsgemäß besonders günstig ist es, dass die Rechnervorrichtung automatisch die Dentalfarbe signalisiert, insbesondere optisch und/oder akkustisch ausgibt.

Weiterhin ist es besonders günstig, dass in der Speichereinheit der Analysevorrichtung mindestens die Daten zweier Zähne abspeicherbar sind, insbesondere die einander benachbarter Zähne, die über eine Erfassungsvorrichtung, wie eine Kamera, der Speichereinheit über eine Datentransportvorrichtung zugeleitet sind. In der Speichereinheit können aber auch die Daten von mehreren Patienten abgespeichert werden, wobei die gesamte Mundsituation, d.h. Ober- und Unterkieferzähne sowie der Zahnfleischbereich mit Hilfe der Dentalkamera aufgenommen und für den einzelnen Patienten abgespeichert werden kann.

Erfindungsgemäß besonders günstig ist es, dass die Dentalfarbe exportiert - beispielsweise zu einer CAD-/CAM-Vorrichtung zur Herstellung von Zähnen - und/oder signalisiert wird.

Erfindungsgemäß besonders günstig ist es, dass der erste Bildausschnitt mit Hilfe der Software in einzelne, den geometrischen Abmessungen der Farbmuster entsprechende Flächensegmente unterteilbar ist, jedem Flächensegment von der Software eine bestimmte, in der Software hinterlegte Dentalfarbe zugewiesen wird und die Farbe des, wenigstens einen Teil des eines Zahnes oder einen Teil des Zahnfleisches beinhaltenden, zweiten Bildausschnitts mit den verschiedenen Farbmustern verglichen und von der Datenrechen- und-speicherheinheit jene Dentalfarbe angezeigt oder ausgegeben wird, die dem Farbmuster zugewiesen wurde, dessen Farbe der Farbe des zweiten Bildausschnitts entspricht oder dieser am ähnlichsten ist.

Erfindungsgemäß besonders günstig ist es, dass insbesondere seine Fläche kleiner als die vestibuläre (labiale oder bukkale) Fläche von zwei Zähnen in der Darstellung auf dem Bildschirm ist, insbesondere geringer als die Fläche eines Zahns.

Eine vorteilhafte Ausgestaltung der erfindungsgemäßen Dentalfarben-Analysevorrichtung sieht vor, diese mit einer zusätzlichen Farbbestimmungseinrichtung zu versehen, so dass zunächst die zutreffende Helligkeitsgruppe bestimmt werden kann. Danach wird die Aufnahme eines Bildes des zu restauriedenden Zahnes sowie zumindest des Nachbarzahnes mit dem darauf angebrachten und befestigten Farbschlüssel vorgenommen und auf dem Bildschirm der erfindungsgemäßen Analysevorrichtung angezeigt. Anschließend werden innerhalb dieser Helligkeitsgruppe die übrigen Farbcharakteristika zugeordnet. Die digitale Unterstützung bei der Farbermittlung ist deshalb besonders wichtig, da Menschen ein unterschiedliches Farbempfinden haben. Dazu kommen noch weitere Faktoren in Betracht, nämlich Kunst- oder natürliches Licht, von der räumlichen Umgebung reflektiertes Licht sowie, in besonderem Masse, der subjektive Eindruck. Dagegen erwartet man von Farbbestimmungseinrichtungen eine konstante Leistung, frei von Unsicherheitsfaktoren. Bei der digitalen Zahnfarbenbestimmung wird mittels einer Sonde ein Lichtstrahl ausgesendet, mit dem die Lichtreflektion des Zahnes gemessen wird. Diese Daten werden mit einem speziellen Computerprogramm ausgewertet und die Zahnfarbe festgelegt. Somit kann Behandlungszeit reduziert werden.

Weitere Vorteile, Einzelheiten und Merkmale ergeben sich aus der nachfolgenden Beschreibung mehrerer Ausführungsformen der Erfindung anhand der Zeichnung.

Es zeigen:
- Fig. 1: eine perspektivische Darstellung einer Ausführungsform eines erfindungsgemä- ßen Zahnschlüssels in schematischer Darstellung;
- Fig. 2: eine perspektivische Darstellung einer erfindungsgemäßen Dentalanalysenvor- richtung;
- Fig. 3: eine Draufsicht auf einen erfindungsgemäßen dentalen Farbschlüssel nach Anbringen auf einen Zahn; und
- Fig. 4: eine Draufsicht auf eine weitere Ausführungsform eines erfindungsgemäßen Farbschlüssels nach Aufbringung auf einen Zahn.

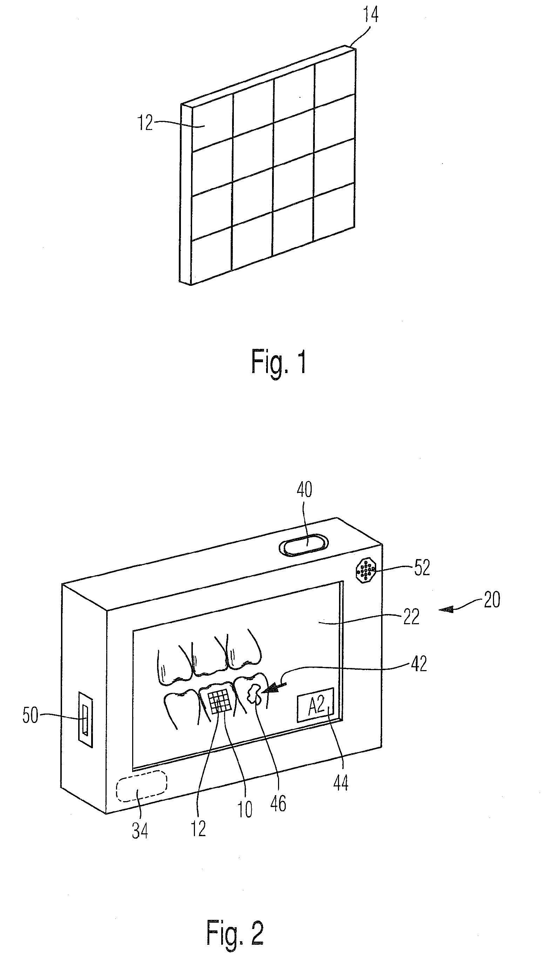

Der in Fig. 1 dargestellte erfindungemäße dentale Farbschlüssel 10 weist eine Vielzahl, nämlich 16, Farbmuster 12 auf, die nach der Art einer Matrix angeordnet sind. Jedes Farbmuster entspricht einer handelsüblichen Zahnfarbe wie A2, A3, A4 usw. und bevorzugt sind einander ähnliche Zahnfarben benachbart angeordnet.

Die Farbmuster 12 sind auf dem plättchenförmigen Farbschlüssel fest angebracht. Der Farbschlüssel weist hierzu einen dünnen Grundkörper 14 auf, der dafür geeignet ist, auf einem Zahn befestigt zu werden, und zwar auf dessen vestibulärer Fläche. Die Befestigung kann entweder mit einem Klebstoff erfolgen, der den Grundkörper 14 in einer Weise festhält, dass er sich mindestens bei leichtem Anstoßen mit der Zunge nicht löst, oder mit einer Klammer, die den Zahn, bevorzugt einen Schneidezahn, übergreift und hierdurch die erwünschte Klemmwirkung bereitstellt. Der Farbschlüssel kann mit einer Doppelklammer ausgestattet sein, so dass der Farbschlüssel an einem Oberkieferzahn und gleichzeitig an dem gegenüberliegenden Unterkieferzahn befestigt werden kann. Somit kann mit der erfindungsemäßen Dentalfarben-Analysevorrichtung ein Farbvergleich der Oberkieferund Unterkieferzähne vorgenommen werden. Es ist aber auch möglich und wird als besonders vorteilhaft angesehen, wenn der Farbschlüssel nicht mit einer eigenständige Klammer versehen ist, sondern eine Klammer auf einem oder zwei Zähnen aufgesteckt werden kann, wobei daraufhin unterschiedliche Farbschlüssel, welche unterschiedliche Helligkeitsgruppen von Farbmustern aufweisen, auf der Klammer aufgesteckt werden können, um die optimale Übereinstimmung mit der Zahnfarbe zu ermitteln.

Es ist auch möglich, den Grundkörper etwas biegsam zu gestalten, so dass er sich besser der ganz leicht gewölbten Oberfläche des Schneidezahns anpassen kann. Bevorzugt ist der Grundkörper deutlich kleiner als ein Zahn, beispielsweise halb so breit, und signifikant dünner, beispielsweise mehr als eine Zehnerpotenz. Hierdurch liegt der erfindungsgemäße Farbschlüssel 10 flächig auf dem Zahn auf, und es ist möglich, einen unmittelbaren Vergleich zwischen dem Farbmuster 12 und dem Zahn zu ermöglichen. Hierzu verbleiben ausreichende freie Bereiche der vestibulären Fläche des Zahns, wobei es sich versteht, dass auch ohne Weiteres ein Nachbarzahn mit dem erfindungsgemäßen Farbschlüssel 10 vergleichbar ist. Anstatt der biegsamen Ausbildung des Grundkörpers kann er etwas gewölbt augebildet sein, so dass sich der Grundkörper an einem natürlichen Zahn anpassen kann und die Form der labialen Fläche eines natürlichen Zahnes wiedergibt.

Der dentale Farbschlüssel 10 weist Farbmuster 12 auf, die aus einem Restaurationsmaterial, vorzugsweise aus Keramik, hergestellt sind. Diese Ausgestalltung ist für die genaue Beurteilung der Zahnfarbe besonders wichtig, da die Aufnahme des Zahnes oder der einander benachbarten Zähne unter unterschiedlichen Lichtverhältnissen erfolgen kann. Dadurch aber, dass die Farbmuster 12 dem Zahnrestaurationsmaterial entsprechen wird erreicht, dass die Qualität derAufnahme das Restaurationsergebnis nicht negativ beeinflusst.

Aus Fig. 2 ist eine dentale Analysevorrichtung 20 ersichtich. Die dentale Analysevorrichtung 20 weist einen Bildschirm 22 sowie eine Steuereinheit 34 auf. Somit wird eine kompakte Dentalfarben-Analysevorrichtung geschaffen, die billiger in ihrer Herstellung als die konventionellen Dentalfarben-Analysevorrichtugen ist. Die dentale Analysevorrichtung 20 weist an der nicht dargestellten, also dem Bildschirm 22 gegenüber liegenden Seite einen CCD-Sensor mit einer Optik auf, um eine Bilderfassung durch eine digitale Aufnahme zu ermöglichen. Hierzu ist ein Auslöser 40 in von Digitalkameras bekannter Weise auf der Oberseite der Analysevorrichtung 20 angebracht.

Die Steuereinheit 34, die gleichzeitig die Rechnervorrichtung und die Speichereinheit umfasst, nimmt nun ein Bild der vestibulären Mundsituation des Patienten mit angebrachtem Farbschlüssel 10 auf. Ein Cursor 42 lässt sich über den Bildschirm 22 bewegen, beispielsweise über einen Touchscreen. Bei Bewegung des Cursors 42 über den Bildschirm 22 wird dann je eine Farbmusterbezeichnung 44 wie "A2" in einem besonderen Feld auf dem Bildschirm eingeblendet, und zugleich eine Kontur 46, die einer angewählten Farbmuster-Farbe 12 des dentalen Farbschlüssels 10 entspricht. Da der dentale Farbschlüssel zusammen mit der Zahnsituation aufgenommen ist, ergeben sich auch ohne Kalibrierung insofern keine Farbfehler.

Damit wird für einen Zahn der Farbverlauf anhand der zur Verfügung stehenden dentalen Zahnfarben festgelegt. Das so abgespeicherte Bild lässt sich nun über eine Schnittstelle 50 in beliebiger geeigneter Weise ausleben und weiter verarbeiten.

Wie in Fig. 2 gezeigt, ist der Farbschlüssel mit den darauf angebrachten Farbmustern als ein Minifarbschlüssel auf dem Zahn angebracht. Der Minifarbschlüssel kann entweder mechanisch oder auch adhäsiv auf dem Zahn befestigt sein. Er kann aber auch als ein virtueller Farbschlüssel auf dem Bild eines dem zu restaurierenden Zahnes angeordneten Nachbarzahnes angebracht werden. Mit Hilfe des Cursors 42 kann der Bediener der Vorrichtung auf eines der Farbmuster zeigen, so dass der zu restaurierende Zahn die angezeigte Zahnfarbe auf dem Bildschirm bildlich wiedergibt. Der Bediener kann dann entweder subjektiv beurteilen und entscheiden, welche Zahnfarbe er für die Zahnrestauration auswählen wird, oder aber die Analysiervorrichtung kann selbst die Zahnfarbe auswählen, die am nähesten zu den benachbarten Zähnen ist.

Falls der Farbschlüssel 10 als ein virtueller Farbschlüssel dargestellt wird, kann er durch eine Bewegung des Cursors auf die nebenstehenden oder oben angezeigten Zähnen platziert werden, so dass mit nur einer Bildaufnahme die gesamte Farbsituation der Oberkiefer- und Unterkiefer-Zähne erfassbar und analysierbar ist. Dies ist besonders vorteilhaft, falls nicht nur ein Zahn reparaturbedürftig ist, sondern z.B. eine Zahnkrone oder ein Gebiss restauriert werden muss.

Über einen Lautsprecher 52 können zusätzlich in beliebiger Weise akkustische Signale ausgegeben werden, beispielsweise auch die erfassten Farbmuster genannt werden.

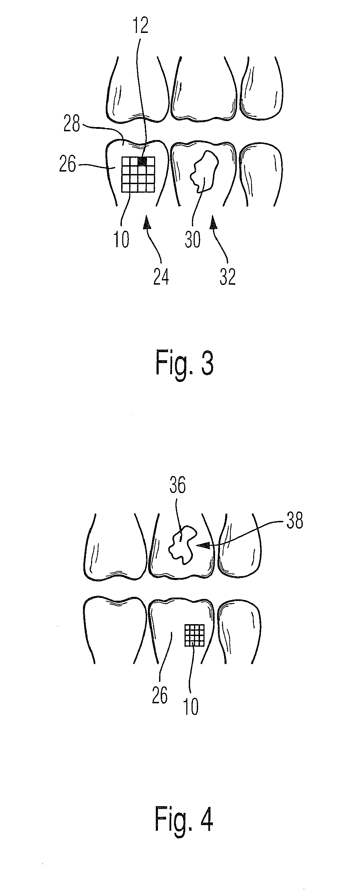

Aus Fig. 3 ist ersichtlich, in welcher Weise ein erfindungsgemäßer Farbschlüssel 10 auf einem Zahn 24 angebracht sein kann. In dem dargestellten Ausführungsbeispiel ist der Farbschlüssel 10 mittig auf der vestibulären Fläche 26 des Zahns angebracht, so dass freie Flächen 28 den Zahnschlüssel 10 allseits umgeben. Dies ist besonders vorteilhaft, da ein Zahn unterschiedliche Schattierungen aufweisen kann. Der miniaturisierte Farbschlüssel kann auf der labialen Fläche eines Zahnes angebracht sein und zwar an unterschiedlichen Stellen.

Durch optischen Vergleich - sei es direkt oder mit Hilfsmitteln - gelingt es, die Übereinstimmung eines Farbmusters 12 mit einer Fläche 30 eines Nachbarzahns 32 zu erfassen, so dass für diese Fläche 30 die Zahnfarbe festliegt und damit erfasst ist.

Besonders günstig ist es, wenn dies bei fotografischer Unterstützung mit der gleichen fotografischen Aufnahme realisiert ist, da dann keine Kalibrierung erforderlich ist, sondern die betreffende Zahnfarbe automatisch erfasst wird.

Aus Fig. 4 ist ersichtlich, in welcher Weise ein Farbschlüssel 10 eingesetzt wird, um einen Bereich 36 eines Antagonisten 38 zu erfassen. In der dargestellten Ausführungsform ist der Zahnschlüssel 10 distal an der vestibulären Fläche des Zahns angebracht, so dass an drei Seiten vergleichweise große Freiflächen 26 entstehen, die für die Beurteilung der Zahnfarbe besonders gut geeignet sind.

## Patentansprüche

1. Dentalfarben-Analysevorrichtung, mit einem Gehäuse, einer eine Speichereinheit aufweisenden Rechnervorrichtung und einem Bildschirm (22), auf dem ein Referenzobjekt (12) gemeinsam mit wenigstens einem Zahn (24) und/oder einen Zahnfleischbereich dargestellt ist, wobei mindestens ein erster Bildausschnitt, der das Referenzobjekt (12) zeigt, sowie mindestens ein zweiter Bildausschnitt, der den Zahn (24), einen Zahnbereich oder Zahnfleischbereich zeigt, von der Rechnervorrichtung erfaßbar ist, **dadurch gekennzeichnet, dass** das Referenzobjekt auf einem Zahn angebracht und insbesondere befestigt ist und eine geringere Größe als der dargestellte Zahn aufweist, wobei das Referenzobjekt ein dentaler Farbschlüssel (10) ist, der Farbmuster (12) aufweist, die nebeneinander angeordnet sind und je eine Dentalfarbe wiedergeben, und dass die Farbe des zweiten insbesondere wählbaren Bildausschnitts (46) von der Rechnervorrichtung mit den dargestellten Farbmustern (12) vergleichbar ist, so dass das Farbmuster (12), welches der Farbe des zweiten Bildausschnitts am ähnlichsten ist, auf dem Bildschirm anzeigbar ist.

2. Analysevorrichtung nach Anspruch 1,
**dadurch gekennzeichnet, dass** das Farbmuster (12) auf dem Bildschirm in Form einer räumlich begrenzten, insbesondere von einer Randlinie umgebenen, Fläche wiedergegeben ist.

3. Analysevorrichtung nach einem der Ansprüche 1 oder 2,
**dadurch gekennzeichnet, dass** der Farbschlüssel (10) plättchenförmig ausgebildet ist, wobei die Farbmuster (12) auf diesem fest angebracht sind, und wobei der Farbschlüssel (10) einen dünnen Grundkörper (14) aufweist, der auf einem Zahn befestigbar ist.

4. Analysevorrichtung nach einem der Ansprüche 1 oder 2,
**dadurch gekennzeichnet, dass** der Farbschlüssel (10) ein virtueller Farbschlüssel ist, der auf einem oder mehreren Zähnen angbringbar, insbesondere projizierbar ist.

5. Analysevorrichtung nach einem der vorhergehenden Ansprüche,
**dadurch gekennzeichnet, dass** die Farbmuster (12) des Farbschlüssels (10) nebeneinander angeordnet sind und zusammen eine Größe aufweisen, die höchstens doppelt so groß und mindestens halb so groß wie die Darstellung des Zahnbereichs oder Zahnfleischbereichs auf dem Bildschirm ist.

6. Analysevorrichtung nach einem der vorhergehenden Ansprüche,
**dadurch gekennzeichnet, dass** der auf dem Zahn angebrachte Farbschlüssel (10) mittig auf einem Referenzzahn angebracht ist, wobei sämtliche Farbmuster (12) höchstens die einfache Breite und/oder Höhe eines Farbmusters von der freien Fläche des Referenzzahnes entfernt sind.

7. Analysevorrichtung nach einem der vorhergehenden Ansprüche,
**dadurch gekennzeichnet, dass** das dem ersten Bildausschnitt ähnlichste Farbmuster (12) optisch und/oder akustisch selektiert angezeigt wird, während eine Zeigereinheit den zweiten Bildausschnitt, also den Zahn, den Zahnbereich oder den Zahnfleischbereich überfährt.

8. Analysevorrichtung nach einem der vorhergehenden Ansprüche,
**dadurch gekennzeichnet, dass** zusätzlich zur Anzeige des Farbmusters (12), insbesondere des selektierten Farbmusters (12), dessen Benennung (A1, A2, .... An) optisch, insbesondere auf dem Bildschirm angezeigt ist und/oder akkustisch ausgegeben ist.

9. Analysevorrichtung nach einem der vorhergehenden Ansprüche, **dadurch gekennzeichnet, dass** die Rechnervorrichtung die farbliche Übereinstimmung, nach Auswahl eines Farbmusters, zwischen dem Referenzzahn und dem zu restaurierenden Zahn auf dem Bildschirm der Analysevorrichtung, vorzugsweise in Prozenten, angibt.

10. Analysevorrichtung nach einem der vorhergehenden Ansprüche, **dadurch gekennzeichnet, dass** der Farbschlüssel (10) mindestens 3, insbesondere 16 verschiedene Farbmuster (16) aufweist, wobei insbesondere mindestens ein Farbmuster (12) einer Bleachfarbe entspricht.

11. Analysevorrichtung nach einem der vorhergehenden Ansprüche, **dadurch gekennzeichnet, dass** der Farbschlüssel (10) mindestens ein Farbmuster (12) aufweist, das einer Zahnfleischfarbe entspricht.

12. Analysevorrichtung nach einem der vorhergehenden Ansprüche, **dadurch gekennzeichnet, dass** die Analysevorrichtung eine Kamera aufweist oder mit einer Kamera zusammenwirkt.

13. Analysevorrichtung nach einem der vorhergehenden Ansprüche, **gekennzeichnet, durch** eine Farbbestimmungs-Einrichtung, zur Ermittlung der Helligkeitsgruppe des zu restaurierenden Zahnes.

14. Verfahren zur Analyse von Dentalfarben, das ein Gehäuse, eine Rechnervorrichtung mit einer Speichereinheit und einen Bildschirm aufweist, auf dem ein Referenzobjekt gemeinsam mit wenigstens einem Zahn und/oder einem Zahnfleischbereich dargestellt wird, wobei mindestens ein erster Bildausschnitt, der das Referenzobjekt zeigt, sowie mindestens ein zweiter Bildausschnitt, der den Zahn, einen Zahnbereich oder Zahnfleischbereich zeigt, von der Rechnervorrichtung erfasst wird,
**dadurch gekennzeichnet, dass** das Referenzobjekt auf einem Zahn angebracht ist, insbesondere vor dem Darstellen des Zahns auf dem Bildschirm, und eine geringere Größe als der dargestellte Zahn aufweist, wobei das Referenzobjekt ein dentaler Farbschlüssel ist, der Farbmuster (12) aufweist, die nebeneinander angeordnet sind und je eine Dentalfarbe wiedergeben, und dass die Farbe des zweiten insbesondere wählbaren Bildausschnitts von der Rechnervorrichtung mit den dargestellten Farbmustern (12) verglichen wird, so dass das Farbmuster (12), welches der Farbe des zweiten Bildausschnitts am ähnlichsten ist, von der Rechnervorrichtung angezeigt oder ausgegeben wird.

15. Verfahren nach Anspruch 11,
**dadurch gekennzeichnet, dass** die Rechnervorrichtung automatisch die Dentalfarbe signalisiert, insbesondere optisch und/oder akkustisch ausgibt.
